# EUROPÄISCHE PATENTANMELDUNG

(11) **EP 4 823 088 A1**
(43) Veröffentlichungstag der Anmeldung: **14.10.2026**
(21) Anmeldenummer: 26170415.9
(22) Anmeldetag: 02.04.2026
(51) Int. Cl.: H04N 7/14

(54) **REMOTE-ASSISTENZ-EINHEIT UND REMOTE-ASSISTENZ-SYSTEM**

(30) Priorität: 08.04.2025 DE 102025113820
(71) Anmelder: Optomech GmbH, 37079 Göttingen (DE); WaveEye UG (haftungsbeschränkt), 93098 Mintraching (DE)
(72) Erfinder: Hermann, Andreas, 37079 Göttingen (DE); Häseler, Hauke, 93098 Mintraching (DE)
(74) Vertreter: Grättinger Möhring von Poschinger Patentanwälte Partnerschaft mbB

(57) **Zusammenfassung**

Ein Remote-Assistenz-System verwendet eine Remote-Assistenz-Einheit (11) zum Erzeugen einer visuellen Markierung (7), die für einen Träger (1) der Remote-Assistenz-Einheit (11) sichtbar ist. Die Remote-Assistenz-Einheit (11) umfasst ein am Kopf tragbares Gestell (17), an dem eine Videokamera (13) zum Erfassen einer Abfolge (31) von Bilddatensätzen (31k) eines Sichtfelds (S) der Videokamera (13) und ein Lichtzeiger (15) zur Abstrahlung eines Lichtstrahls (15A) in einer Abstrahlrichtung (A) vorgesehenen sind. Der Lichtzeiger (15) umfasst eine Einstellvorrichtung (15B), die zur Einstellung der Abstrahlrichtung (A) in das Sichtfeld (S) gemäß einem Einstellparameter (P) ausgebildet ist. Der Träger der Remote-Assistenz-Einheit (11) oder eine remote-Person, der Bilddaten der Videokamera (13) gezeigt werden, kann die visuellen Markierung im Sichtfeld (S) setzen.

## Beschreibung

Die Erfindung betrifft eine Remote-Assistenz-Einheit zum Erzeugen einer visuellen Markierung, die für einen Träger der Remote-Assistenz-Einheit sichtbar ist. Ferner betrifft die Erfindung ein Remote-Assistenz-System, das zusätzlich zur Remote-Assistenz-Einheit eine Remote-Assistenz-Station umfasst.

Kommunikation per Videokonferenz und insbesondere eine gegenseitige Unterstützung bei Tätigkeiten im Rahmen einer Videokonferenz sind in der Arbeitswelt zum Standard geworden. Dies betrifft vor allem die Kommunikation zwischen zwei oder mehreren Computer-basierten Arbeitsplätzen. Wenn sich jedoch einer der Teilnehmer einer Videokonferenz frei bewegen und insbesondere seine Hände frei benutzen können soll, wie zum Beispiel ein Servicetechniker, der sich an einem schwer zugänglichen oder hinsichtlich der Bewegungsfreiheit eingeschränkten Einsatzort befindet, sind übliche Videokonferenzsysteme weniger geeignet, den erforderlichen Informationsaustausch zu ermöglichen. Hier hat sich der sogenannte Remote-Video-Support etabliert, bei dem einem remote-Teilnehmer mithilfe eines live übertragenen Videos ein je nach Ort und Blickrichtung vorliegendes Blickfeld eines Servicetechnikers, der an einem Computer-Arbeitsplatz sitzt, zugänglich gemacht wird.

Ergänzt wird der Remote-Video-Support mit sogenannten intelligenten Brillen ("Smart-Glasses"), die neben einer (hochauflösenden) Videokamera die Möglichkeit zum Einblenden von weiteren Informationen bietet. Ein Kamerabild einer von einer Person - nachfolgend als Smart-Glass-Träger bezeichnet - eingesetzten intelligenten Brille wird über eine Datenverbindung wie Inter- oder Intranet an eine Person - nachfolgend als remote-Person bezeichnet - übertragen. Smart-Glass-Träger und remote-Person kommunizieren miteinander - ähnlich wie bei einer Videokonferenz zwischen Büro-Arbeitsplätzen - und ermöglichen die Unterstützung des Smart-Glass-Trägers beispielsweise im Rahmen von durchzuführenden Servicetätigkeiten. Beispiele von Smart-Glasses umfassen Augmented Reality (AR)/ intelligente Brillen, die mit Sensoren, wie eine Kamera, ein Mikrofon und/oder eine eye-tracking Funktionalität, sowie mit einem Lautsprecher ausgestattet sind und beispielsweise von Apple, Google, Amazon, Vuzix, Vue, Epson, Rokid oder Tobii angeboten werden.

Im Rahmen einer AR-Anwendung beschreibt US 2014/339855 A1 eine Selektion mittels eines fest an einer AR-Brille montierten Laserpointers und US 6,373,961 B1 beschreibt die Bewegung eines Cursors in einem Monitorbild mittels Eye-tracking.

Die hierin offenbarten Konzepte sind darauf gerichtet, zumindest zum Teil einen oder mehrere Aspekte, die hinsichtlich der vielfältigen Einsatzmöglichkeiten von Remote-Assistenzen wie bei einem Remote-Video-Support gegeben sind, zu verbessern. So liegt einem Aspekt dieser Offenbarung die Aufgabe zugrunde, Kommunikationshürden zwischen einer vor-Ort-Person und einer remote-Person abzubauen. Eine Aufgabe besteht beispielsweise darin, die Kommunikation mit direktem Bezug auf das Blickfeld, das von der vor-Ort-Person gesehen wird und von einer Videokamera zumindest teilweise als Sichtfeld der Videokamera erfasst und der remote-Person angezeigt werden kann, zu verbessern.

Zumindest eine dieser Aufgaben wird gelöst durch eine Remote-Assistenz-Einheit nach Anspruch 1 und ein Remote-Assistenz-System nach Anspruch 12. Weiterbildungen sind in den Unteransprüchen angegeben.

In einem Aspekt umfasst eine Remote-Assistenz-Einheit zum Erzeugen einer visuellen Markierung, die für einen Träger der Remote-Assistenz-Einheit sichtbar ist, ein vom Träger am Kopf tragbares Gestell, eine am Gestell vorgesehene Videokamera zum Erfassen einer Abfolge von Bilddatensätzen eines Sichtfelds der Videokamera und einen am Gestell vorgesehenen Lichtzeiger zur Abstrahlung eines Lichtstrahls in einer Abstrahlrichtung, wobei der Lichtzeiger eine Einstellvorrichtung umfasst, die zur Einstellung der Abstrahlrichtung in das Sichtfeld gemäß einem Einstellparameter ausgebildet ist. Insbesondere kann mit dem Lichtstrahl die visuelle Markierung auf einem im Sichtfeld liegenden Gegenstand erzeugt werden. Ferner umfasst die Remote-Assistenz-Einheit ein Steuerungsmodul, das dazu eingerichtet ist, die Abfolge von Bilddatensätzen an einem Bilddateneingang des Steuerungsmoduls zu empfangen und eine Abfolge von bildverarbeiteten Bilddatensätzen an einem Bilddatenausgang des Steuerungsmoduls bereitzustellen, Markierdaten, die sich auf einen Markierdatensatz aus der Abfolge von bildverarbeiteten Bilddatensätzen beziehen, zu empfangen, einen den Markierdaten zugeordneten Einstellparameter zu bestimmen, wobei der Einstellparameter die Abstrahlrichtung an einen Bilddatensatz anpasst, der zeitlich nach einem dem Markierdatensatz zugeordneten Bilddatensatz erfasst wurde, und den Einstellparameter an die Einstellvorrichtung auszugeben. Entsprechend kann in einem entsprechenden remote-Betriebsmodus der Einstellparameter an die Einstellvorrichtung ausgeben werden, um den Lichtstrahl vom Lichtzeiger ausgehend auf einen dem Markierdatenpunkt entsprechenden Bereich im Sichtfeld zu richten.

In einem weiteren Aspekt umfasst ein Remote-Assistenz-System eine wie hierin beschriebene Remote-Assistenz-Einheit und eine Remote-Assistenz-Station mit einer Recheneinheit, einer Anzeige sowie Eingabemitteln. Die Remote-Assistenz-Station ist dazu eingerichtet, bildverarbeitete Bilddatensätzen von einem Bilddatenausgang eines Steuerungsmoduls der Remote-Assistenz-Einheit zu empfangen. Ferner ist die Remote-Assistenz-Station insbesondere dazu eingerichtet ist, mithilfe einer Markiereinheit einen Markierdatenpunkt in einem Bilddatensatz aus der Abfolge von bildverarbeiteten Bilddatensätzen festzulegen und Markierdaten, die den Markierdatenpunkt und/oder eine daraus abgeleitete Richtung, sowie Informationen zu dem Bilddatensatz und/oder zu dem bildverarbeiteten Bilddatensatz, die jeweils dem Markierdatensatz zugeordnet sind, und/oder Informationen zum Markierdatensatz an ein Steuerungsmodul der Remote-Assistenz-Einheit auszugeben.

In einigen Weiterbildungen der Remote-Assistenz-Einheit können das Steuerungsmodul und die Einstellvorrichtung dazu eingerichtet sein, den Einstellparameter und die Abstrahlrichtung fortlaufend für die zeitlich nach dem Markierdatensatz erfassten Bilddatensätze zu aktualisieren. Auf diese Weise kann, die visuelle Markierung insbesondere im Sichtfeld, z. B. in einem Arbeitsbereich im Sichtfeld, räumlich für den Träger zu stabilisiert werden, in einer Abfolge von visuell markierten, bildverarbeiteten Bilddatensätzen stabilisiert werden, und/oder gemäß einer Änderung im empfangenen Markierdatenpunkt im Sichtfeld verlagert werden.

In einigen Weiterbildungen der Remote-Assistenz-Einheit kann das Steuerungsmodul eine Markierrecheneinheit aufweisen, die dazu eingerichtet ist, für einen Bilddatensatz, der zeitlich nach dem, dem Markierdatensatz zugeordneten Bilddatensatz erfasst wurde, den Einstellparameter basierend auf Markierdaten abzuleiten. Die Markierdaten können den Markierdatenpunkt und/oder eine daraus abgeleitete Richtung (insbesondere eine für den Lichtzeiger/den Lichtstrahl auf den Markierdatenpunkt abgeleitete Richtung), und Informationen zu dem Bilddatensatz und/oder zu dem bildverarbeiteten Bilddatensatz, die jeweils dem Markierdatensatz zugeordnet sind, und/oder Informationen zum Markierdatensatz umfassen. Auf diese kann insbesondere die Abstrahlrichtung an den Bilddatensatz (oder die nachfolgend erfassten Bilddatensätze) angepasst werden.

In einigen Weiterbildungen der Remote-Assistenz-Einheit kann das Steuerungsmodul eine Markierrecheneinheit aufweisen, die dazu eingerichtet ist, zur Bestimmung des Einstellparameters einen Markierdatenpunkt und/oder eine daraus abgeleitete Richtung (insbesondere eine für den Lichtzeiger/den Lichtstrahl auf den Markierdatenpunkt abgeleitete Richtung) auf einen Bilddatensatz, der zeitlich nach dem, dem Markierdatensatz zugeordneten Bilddatensatz erfasst wurde, zu übertragen und die Abstrahlrichtung für den übertragenen Markierdatenpunkt und/oder die daraus abgeleitete übertragene Richtung basierend auf dem Bilddatensatz zu bestimmen.

In einigen Weiterbildungen der Remote-Assistenz-Einheit kann die Einstellvorrichtung mindestens einen Aktuator, wie ein Piezo-Element, eine Spule, ein Motor (z. B. Schrittmotor) und/oder ein MEMS-Spiegel, umfassen. Der Aktuator kann dazu eingerichtet sein, eine Auslenkung des Lichtstrahls zu bewirken, wobei insbesondere zwei Aktuatoren für eine Auslenkung des Lichtstrahls in zwei, bevorzugt orthogonale, Richtungen vorgesehen sein können. Insbesondere kann der Aktuator dazu eingerichtet sein, eine Relativbewegung zwischen optischen Komponenten, wie eine Lichtquelle, z. B. eine Laserdiode, eine Linse oder ein Objektiv, zu bewirken, oder als Piezohalterung des Lichtzeigers am Gestell eine bewegliche (ausrichtbare) Befestigung bereitzustellen. Ferner kann die Einstellvorrichtung zur Ablenkung des Lichtstrahls eine optische Komponente, wie ein Umlenkspiegel oder ein Prisma-Element, z. B. ein (bevorzugt zwei) rotierbarer optischer Keile, umfassen, wobei der Aktuator dazu eingerichtet sein kann, die optische Komponente zu bewegen, insbesondere zu kippen oder zu rotieren, um eine Ablenkung des Lichtstrahls zu verändern. Alternativ und zusätzlich kann die Einstellvorrichtung eine Halterung einer Lichtquelle des Lichtzeigers oder eines optischen Elements, beispielsweise ein Projektionsobjektiv und/oder ein Umlenkspiegel, umfassen. Mindestens ein Aktuator der Einstellvorrichtung, beispielsweise eine Spule, ein Piezo-Element, ein Motor und/oder ein MEMS-Spiegel, kann auf die Halterung einwirken, wobei insbesondere die Aktuatoren für eine Auslenkung des Lichtstrahls in zwei, vorzugsweise orthogonale, Richtungen vorgesehen seien können.

In einigen Weiterbildungen kann die Remote-Assistenz-Einheit ferner eine Batterieeinheit aufweisen, die mit dem Steuerungsmodul eine Prozesseinheit bilden, die kabellos oder kabelgebunden mit der Video-Kamera und dem Lichtzeiger verbunden ist und insbesondere mit einem Tragegurt vom Träger getragen wird/tragbar ist. Ferner kann die Remote-Assistenz-Einheit eine am Gestell angeordnete Gestell-Batterieeinheit, insbesondere zur Energieversorgung der Video-Kamera und des Lichtzeigers, aufweisen.

In einigen Weiterbildungen kann die Remote-Assistenz-Einheit ferner eine, insbesondere an dem Gestell angeordnete, Eye-Tracking-Einheit zum Erfassen von Blickrichtungsdaten des Trägers umfassen. Die Eye-Tracking-Einheit kann ferner eine Auswahl von Blickrichtungsdaten zu einem auswählbaren Zeitpunkt ermöglichen und diese als Markierrichtungsdaten bereitstellen.

In einigen Weiterbildungen der Remote-Assistenz-Einheit kann der Lichtzeiger dazu eingerichtet sein, die Markierrichtungsdaten von der Eye-Tracking-Einheit zu empfangen und die Abstrahlrichtung basierend auf den Markierrichtungsdaten einzustellen, um eine visuelle Markierung im Sichtfeld zu erzeugen, die insbesondere von der Videokamera in einer Abfolge von Bilddatensätzen erfassbar ist (sowie auch von vor-Ort-Personen wie dem Träger gesehen werden kann). Auf diese Weise kann die visuelle Markierung auf einem im Sichtfeld in Blickrichtung liegenden Gegenstand in einem Trägerbetriebsmodus erzeugt werden.

In einigen Weiterbildungen der Remote-Assistenz-Einheit kann das Steuerungsmodul dazu eingerichtet sein, Markierrichtungsdaten von der Eye-Tracking-Einheit zu empfangen. Ferner kann das Steuerungsmodul eine Eye-Tracking-Markierrecheneinheit aufweisen, die dazu eingerichtet ist, einen Versatz des Sichtfeldes zu erfassen und die Markierrichtungsdaten an den Versatz anzupassen und als Einstellparameter für die Einstellvorrichtung auszugeben, um eine räumlich stationäre visuelle Markierung im Sichtfeld zu erzeugen. Insbesondere kann die visuelle Markierung von der Videokamera in einer Abfolge von Bilddatensätzen erfassbar sein und die Bilddatensätzen können in einer Abfolge von bildverarbeiteten Bilddatensätzen an einem Bilddatenausgang des Steuerungsmoduls - insbesondere zum Empfang durch eine Remote-Assistenz-Station - bereitgestellt werden. Der Versatz des Sichtfeldes beispielsweise basierend auf einer Nachverfolgung eines Bildausschnitts im Sichtfeld oder basierend auf einer Nachverfolgung einer Bildstruktur im Sichtfeld wie eine Kanten- oder Eckennachverfolgung berechnet werden.

In einem weiteren Aspekt ist ein Lichtzeiger zur Abstrahlung eines Lichtstrahls in einer (einstellbaren) Abstrahlrichtung ausgebildet. Der Lichtzeiger umfasst eine Lichtquelle zur Abgabe des Lichtstrahls entlang einer Strahlachse und eine Einstellvorrichtung, die zur Einstellung der Abstrahlrichtung ausgebildet ist. Die Einstellvorrichtung umfasst einen ersten Spiegel und einen zweiten Spiegel, wobei der erste Spiegel entlang der Strahlachse zur Ablenkung des Lichtstrahls auf den zweiten Spiegel angeordnet ist, und der zweite Spiegel entlang der Achse zur Ablenkung des Lichtstrahls in eine Arbeitsebene angeordnet ist. Ferner umfasst die Einstellvorrichtung eine erste Halterung, die den ersten Spiegel hält und um die Strahlachse derart rotierbar vorgesehen ist, dass die Achse und somit der zweite Spiegel um die Strahlachse rotierbar sind, wobei die Ablenkung durch den zweiten Spiegel unverändert bleibt. Ferner umfasst die Einstellvorrichtung eine zweite Halterung, die den zweiten Spiegel hält und um die Achse derart rotierbar vorgesehen ist, dass eine Ablenkung durch den zweiten Spiegel und damit die Abstrahlrichtung einstellbar sind. Ferner umfasst die Einstellvorrichtung einen ersten Rotationsantrieb zur Ansteuerung der Rotation der ersten Halterung und zur Einstellung einer Winkelposition des ersten Spiegels, sowie einen zweiten Rotationsantrieb zur Ansteuerung der Rotation der zweiten Halterung und entsprechend zur Einstellung einer Winkelposition des zweiten Spiegels.

Die Erfinder haben erkannt, dass eine grundsätzliche Hürde bei der Unterstützung einer vor-Ort-Person durch eine remote-Person, die entsprechend nicht vor Ort ist, auf die Tatsache zurückgeht, dass räumlich getrennte Personen nicht einfach auf sichtbare Objekte im Blickfeld des jeweils anderen zeigen können. Stattdessen müssen sich z. B. Smart-Glass-Träger und remote-Person gegenseitig beschreiben, welches Objekt gerade gemeint ist. Die genaue Bestimmung des Objekts kann insbesondere bei komplexeren Aufgaben nicht leicht und somit fehleranfällig sein.

Das hierin vorgeschlagene Konzept der Remote-Assistenz kann diese Hürde durch einen an einem Gestellt und in der Abstrahlrichtung einstellbaren Lichtzeiger überwinden. Der Lichtzeiger kann die Kommunikation in beide Richtungen zwischen vor-Ort-Person und remote-Person verbessern, wie nachfolgend erläutert wird.

Im Rahmen des erfindungsgemäßen Konzepts der Remote-Assistenz kann einer remote-Person ein Sichtfeld einer Kamera (üblicherweise ein räumlich bildstabilisierter Bildbereich des Kamerabildes, der hierin auch als Arbeitsbereich bezeichnet wird) an einem Monitor angezeigt werden, wobei das Sichtfeld der Kamera an das Blickfeld des Trägers der Remote-Assistenz-Einheit angepasst ist. Im dargestellten Arbeitsbereich kann die remote-Person - zum Beispiel per Maus-Eingabe - einen Markierpunkt festlegen, wobei sich der Markierpunkt auf die Bilddaten des momentan angezeigten Sichtfelds (z. B. die Bilddaten des räumlich stabilisierten Bildbereichs) bezieht. Ziel ist es, den Lichtzeiger gemäß dem festgelegten Markierpunkt auszurichten, eine visuelle Markierung auf einem Gegenstand im Raum, d. h. vor Ort, zu erzeugen und diese dort stationär zu halten, sodass die remote-Person die Kommunikation visuell unterstützen kann, indem sie auf echte/reale Objekte im Blickfeld der vor-Ort-Person mit dem Lichtstrahl des Lichtzeigers zeigt.

Optional kann die Remote-Assistenz-Einheit mit Eye-Tracking-Sensoren ausgestattet werden, die die Blickrichtung der vor-Ort-Person erfassen. Dies erlaubt es, der remote-Person am Bildschirm anzuzeigen, auf welches Objekt im Blickfeld und damit auf welche Stelle im dargestellten Arbeitsbereich die vor-Ort-Person schaut.

Zur Sicherstellung einer korrekten und gewünschten Abstrahlrichtung ist der Lichtzeiger mit dem Sichtfeld der Kamera abzugleichen. Ferner ist das Kamerabild mit dem optionalen Eye-Tracking in Relation zu setzen, damit die Blickrichtung des Trägers keinen Offset zum Lichtstrahl des Lichtzeigers aufweist. Beide Aspekte können im Rahmen der Produktion kalibriert werden; sie sind aber evtl. in der Anwendung an eine aktuell vorliegende Fokussierung und die spezifischen Verhältnisse des Umgebungslichts anzupassen. Ferner können softwareseitig Bildbearbeitungsschritte durchgeführt werden, bevor das Kamera-Bild der Remote-Anwendung zur Verfügung gestellt wird. Beispielsweise kann eine BildStabilisierung erfolgen, um z. B. kleine Kopfbewegungen auszugleichen.

Für das erfindungsgemäße Konzept gibt es diverse Anwendungsfelder wie zum Beispiel im genannten Servicebereich, in dem ein Servicetechniker *remote* von speziell geschultem Personal unterstützt werden kann, oder in einem medizinischen Bereich, in dem ein Arzt *remote* von einem Fachmediziner unterstützt wird.

Die Remote-Assistenz-Einheit mit dem ausrichtbaren Lichtstrahl des Lichtzeigers, optional um Eye-Tracking erweitert, kann somit Kommunikationshürden zwischen einer vor-Ort-Person und einer remote-Person abbauen. Echtzeitbildverarbeitung und Hochleistungs-Hard- und Software können dabei sicherstellen, dass eine möglichst verzögerungsfreie und sichere - bevorzugt wechselseitige - Kommunikation über die visuelle Markierung mit dem Lichtstrahl des Lichtzeigers stattfinden kann.

Überdies kann das hierin vorgeschlagene Konzept (intelligente) Stand-der-Technik-Brillen erweitern, indem sich die kommunizierenden Parteien gegenseitig Objekte im Blickfeld mit einem in die Brille integrierten und remote ansteuerbaren Lichtzeiger anzeigen. Sowohl die remote Positionierbarkeit der visuellen Markierung als auch das optional integrierbare Eye-Tracking können, bei entsprechender technischer Umsetzung, einen Mehrwert für die Anwender in die Remote-Assistenz einbringen.

Das erfindungsgemäße Remote-Assistenz-System kann einen oder mehrere der hierin genannten Vorteile gegenüber dem Stand der Technik aufweisen. Allgemein bietet das Remote-Assistenz-System die Möglichkeit, sich gegenseitig Objekte im Sichtfeld der vor-Ort-Person durch eine visuelle Markierung anzuzeigen; entweder ausgehend von der remote-Person: durch Ansteuern des Lichtzeigers gemäß eines Markierpunkts in einem Bilddatensatz, sodass eine visuelle Markierung für die vor-Ort-Person sichtbar wird, oder optional/alternativ durch die vor-Ort-Person (d. h., dem Träger der Remote-Assistenz-Einheit): durch Ansteuern des Lichtzeigers gemäß einer erfassten Blickrichtung der vor-Ort-Person und dem Erzeugen von Bilddaten für die remote-Person, die die visuelle Markierung enthalten.

Daraus können sich folgende Vorteile ergeben:
- Wartung & Reparatur: Techniker können das erfindungsgemäße Remote-Assistenz-System verwenden, um ortsbezogene Anweisungen während der Fehlerbehebung zu erhalten oder ihr "markiertes" Blickfeld mit entfernten Experten zu teilen. Dies verbessert die Effizienz und Genauigkeit von Wartungsarbeiten.
- Audit & Inspektion: Inspektoren können das erfindungsgemäße Remote-Assistenz-System verwenden, um visuelle Inspektionen von Anlagen und Ausrüstungen durchzuführen. Die Live-Übertragung der Bilder kann es Experten ermöglichen, aus der Ferne ortsbezogene Ratschläge zu geben oder gemeinsam Probleme zu analysieren.
- Kundenbetreuung: In Fällen, in denen vor-Ort-Unterstützung erforderlich ist, können Service-Techniker das erfindungsgemäße Remote-Assistenz-System verwenden, um Probleme zu visualisieren und Support von entfernten Experten zu erhalten. Mitarbeiter können das erfindungsgemäße Remote-Assistenz-System verwenden, um Schulungen oder Anleitungen direkt vor Ort zu erhalten. Dies ist besonders in Bereichen nützlich, in denen ein visuelles Aufzeigen von Objekten im Raum wichtig ist.
- Einarbeitung/Training: In technischen Berufen können Trainees das erfindungsgemäße Remote-Assistenz-System verwenden, um Unterstützung bei komplexen Aufgaben von erfahrenen Fachleuten zu erhalten. Trainer können das erfindungsgemäße Remote-Assistenz-System verwenden, um Schulungen aus der Ferne durchzuführen. Dies kann besonders nützlich sein, wenn sich Trainer und Trainee an verschiedenen Standorten befinden.

In Branchen mit hohen Sicherheitsanforderungen kann das erfindungsgemäße Remote-Assistenz-System für Schulungen im Bereich Sicherheit und Notfallvorsorge eingesetzt werden.

Hierin werden Konzepte offenbart, die es erlauben, zumindest teilweise Aspekte aus dem Stand der Technik zu verbessern. Insbesondere ergeben sich weitere Merkmale und deren Zweckmäßigkeiten aus der folgenden Beschreibung von Ausführungsformen anhand der Figuren. Von den Figuren zeigen:
- Fig. 1: eine schematische Skizze zur Verdeutlichung eines Remote-Assistenz-Systems;
- Fig. 2: eine schematische Skizze einer beispielhaften Remote-Assistenz-Einheit;
- Fig. 3: ein schematisches Flussdiagramm zur Verdeutlichung eines beispielhaften Steuerungskonzepts (remote-Betriebsmodus);
- Fig 4A bis Fig. 4D: schematische Skizzen von Lichtzeigern mit einer einstellbaren Abstrahlrichtung;
- Fig. 5: ein schematisches Flussdiagramm zur Verdeutlichung eines beispielhaften Steuerungskonzepts mithilfe Eye-Trackings (Trägerbetriebsmodus);
- Fig. 6: eine Skizze zur Verdeutlichung einer auf Prismen-Elementen basierenden Strahlablenkung;
- Fig. 7: eine Aufsicht auf eine weitere Ausführungsform eines Lichtzeigers mit einer über Rotationseinheiten einstellbaren Abstrahlrichtung; und
- Fig. 8: eine Schnittansicht des Lichtzeigers der Fig. 7..

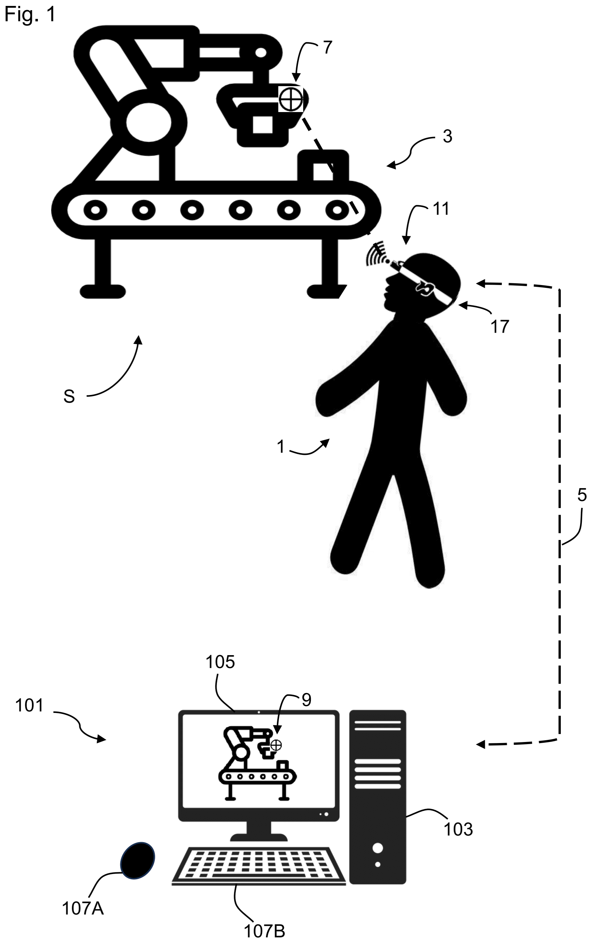

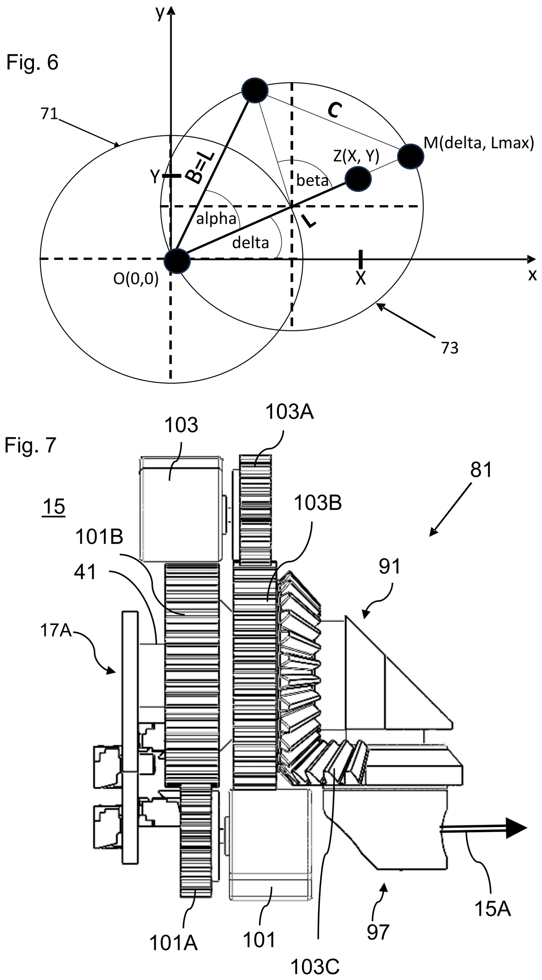

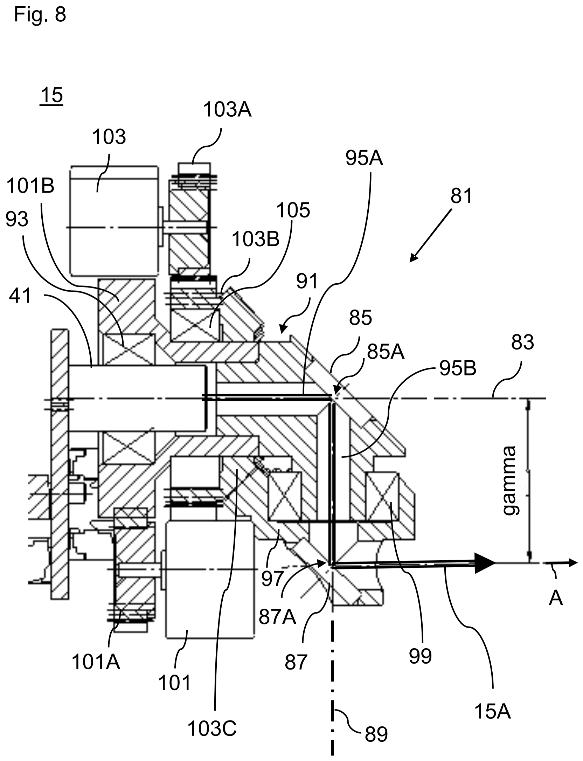

Im Zusammenhang mit den Figuren 1 bis 5 werden nachfolgend beispielhafte Ausführungsformen einer visuell unterstützten Remote-Assistenz beschrieben. Die Fig. 6 verdeutlicht eine Ansteuerung einer auf Prismen-Elementen basierenden Strahlablenkung. Die Figuren 7 und 8 zeigen eine weitere Ausführungsform eines in der Abstrahlrichtung einstellbaren optischen Lichtzeigers mit einer Strahlführung, wie sie allgemein zum Abtasten eines Sichtbereichs, und insbesondere für die hierin offenbarte Anwendung der Remote-Assistenz, verwendet werden kann. Die in der Abstrahlrichtung einstellbare optische Strahlführung, hierin auch als Einstellvorrichtung bezeichnet, zeichnet sich durch die einfache Zuordnung von Zielkoordinaten, angegeben in zweidimensionalen Vektorkoordinaten, zu den die Einstellung vornehmenden Einstellaktuatoren aus.

Fig. 1 zeigt eine schematische Skizze zur Verdeutlichung eines visuell unterstützten Remote-Assistenz-Systems, wie es durch die hierin offenbarten Konzepte ermöglicht wird. Die Remote-Assistenz ist spezifisch dafür eingerichtet, eine Kommunikation zwischen einer vor-Ort-Person 1 (hierin auch als Träger einer Remote-Assistenz-Einheit 11 bezeichnet) und einer remote-Person (nicht gezeigt), die sich an einer Remote-Assistenz-Station 101, d. h., nicht vor Ort, befindet, visuell zu unterstützen. Die Remote-Assistenz-Einheit 11 und die Remote-Assistenz-Station 101 bilden das Remote-Assistenz-System.

Im Beispiel der Fig. 1 ist die vor-Ort-Person 1 ein Techniker, der die Remote-Assistenz-Einheit 11 trägt und Objekte im realen Raum, im Beispiel der Fig. 1 eine Werkzeugmaschine 3, betrachtet. Über die Remote-Assistenz-Station 101 steht die remote-Person im inhaltlichen Austausch mit der vor-Ort-Person 1 und unterstützt z. B. die vor-Ort-Person 1 bei deren Tätigkeiten (Wartung & Reparatur, Audit & Inspektion, medizinische Eingriffe/Behandlungen...). Die Remote-Assistenz-Station 101 umfasst allgemein eine Recheneinheit (Computer 103), eine Anzeige (Monitor 105) sowie Eingabemittel (Maus 107A und/oder Tastatur 107B) und ist z. B. ein stationärer Computer-basierter Arbeitsplatz oder ein mobiler Computer.

Die Remote-Assistenz-Einheit 11 und die Remote-Assistenz-Station 101 stehen über eine Datenverbindung 5 zum Datenaustausch in Verbindung. Beispielsweise sind die Remote-Assistenz-Einheit 11 und die Remote-Assistenz-Station 101 in das Internet oder in ein Intranet zum Datenaustausch eingebunden.

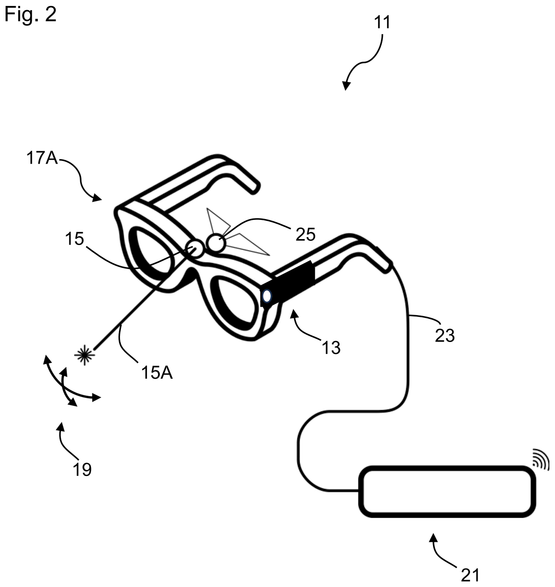

Die Remote-Assistenz-Einheit 11 umfasst u. a. eine Videokamera 13 (siehe Fig. 2), die für ein (Kamera-)Sichtfeld S Bilddaten erfasst. Die Remote-Assistenz-Einheit 11 ist ferner dazu eingerichtet, eine visuelle Markierung 7 mit einem Lichtzeiger 15 (siehe Fig. 2) zu erzeugen, wobei die visuelle Markierung 7 für den Träger der Remote-Assistenz-Einheit (vor-Ort-Person 1) sichtbar, d. h. visuell erkennbar, ist. In Fig. 1 ist die visuelle Markierung 7 als ein beleuchteter Bereich auf der Werkzeugmaschine 3, die sich im Blickfeld der vor-Ort-Person 1 befindet, angedeutet. Im Beispiel der Fig. 1 sind die Videokamera 13 und der Lichtzeiger 15 an einem am Kopf tragbaren Gestell 17 befestigt, sodass das Sichtfeld S der Videokamera 13 und die Abstrahlung eines Lichtstrahls des Lichtzeigers 15 mit dem Blickfeld der vor-Ort-Person 1 abstimmbar sind.

Fig. 1 zeigt einen Bilddatensatz des Sichtfeldes S auf dem Monitor 105 der Remote-Assistenz-Station 101, wobei der Bilddatensatz Bilddaten der Werkzeugmaschine 3 umfasst. Ein Bereich 9 der visuellen Markierung im Bilddatensatz ist angedeutet.

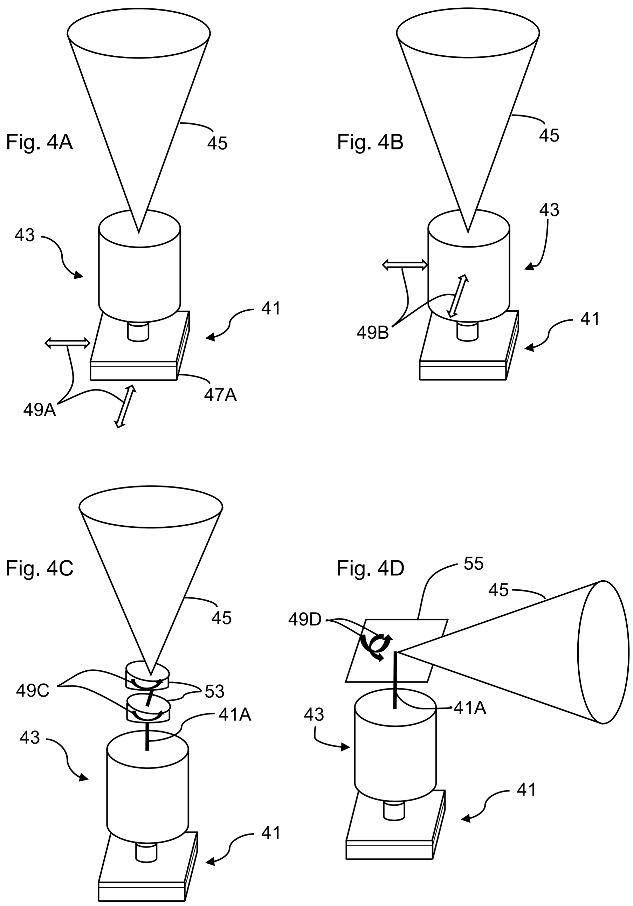

Fig. 2 zeigt eine beispielhafte Ausführungsform einer Remote-Assistenz-Einheit 11, die als Gestell 17 ein Brillengestell 17A verwendet. Am Brillengestell 17A sind die Videokamera 13 (beispielhaft an einem Bügel) und der Lichtzeiger 15 zur Abgabe eines Lichtstrahls 15A mittig (beispielhaft am Nasensteg) montiert. Die Videokamera 13 nimmt im Wesentlichen das Blickfeld des Trägers als Sichtfeld S der Videokamera 13 auf. Der Lichtstrahl 15A des Lichtzeigers 15 kann im Raum mithilfe einer Einstellvorrichtung (siehe Figuren 4A bis 4D) ausgerichtet werden. Wie mit zwei Pfeilen 19 in Fig. 2 verdeutlicht wird, kann der Lichtstrahl 15A z. B. mit einem oder mehreren Aktuatoren "horizontal" und
"vertikal" geneigt werden, um beispielsweise auf einen ausgewählten Punkt im Sichtfeld S der Videokamera 13 zu leuchten und diesen Punkt somit in einem Kamerabild hervorzuheben. Beispielhafte Ausführungsformen des Lichtzeigers 15 werden in Zusammenhang mit Figuren 4A bis 4D beschrieben.

Ferner zeigt Fig. 2 schematisch ein Steuerungsmodul 21, das mit der Videokamera 13 und dem Lichtzeiger 15 zum Datenaustausch und/oder zur Stromversorgung beispielsweise über ein Kabel 23 verbunden ist und einen oder mehrere Prozessoren insbesondere für eine Bildverarbeitung der Videodaten der Videokamera 13 und für Prozesse zur Ansteuerung des Lichtzeigers 15 umfasst. Als Prozessor kann ein z. B. mehrkerniger ARM-System-On-Chip eingesetzt werden, dessen Prozessoren (CPU, GPU) eine ausreichende Rechenleistung für das Einlesen und Verarbeiten der Videokamera-Bilddaten bei einer hohen Frame-Rate, bei gleichzeitig vergleichsweise geringem Stromverbrauch und geringer Abwärme bereitstellen können. Der System-On-Chip kann ferner Schnittstellen für eine kabelgebundene Verbindung zu den am Gestell befestigten Komponenten und für eine kabellose Verbindung ins Internet aufweisen. Das Steuerungsmodul 21 ist ferner z. B. mit dem Internet/einem Intranet zum Datenaustausch mit der Remote-Assistenz-Station 101 - bevorzugt kabellos - verbindbar. Für einen guten Tragekomfort sollte wenig Gewicht am Kopf getragen werden, sodass das Steuerungsmodul 21 zusammen mit einer Batterieeinheit beispielsweise an einem Tragegürtel oder Tragegurt als Prozessmodul getragen werden kann. Beispielsweise kann eine Trägerplatine des Steuerungsmoduls 21 die folgenden Aufgaben übernehmen: Batterie-Halterung und Strom-Management, kabellose Verbindung zur Außenwelt (WiFi/Bluetooth), kabelgebundener Anschluss zum vom Träger am Kopf getragenen Gestell, Aktuator-Verstärker für den Lichtzeiger, Pegel- oder Protokollwandler für die Kamera-Signale, Audio-Verstärker etc.

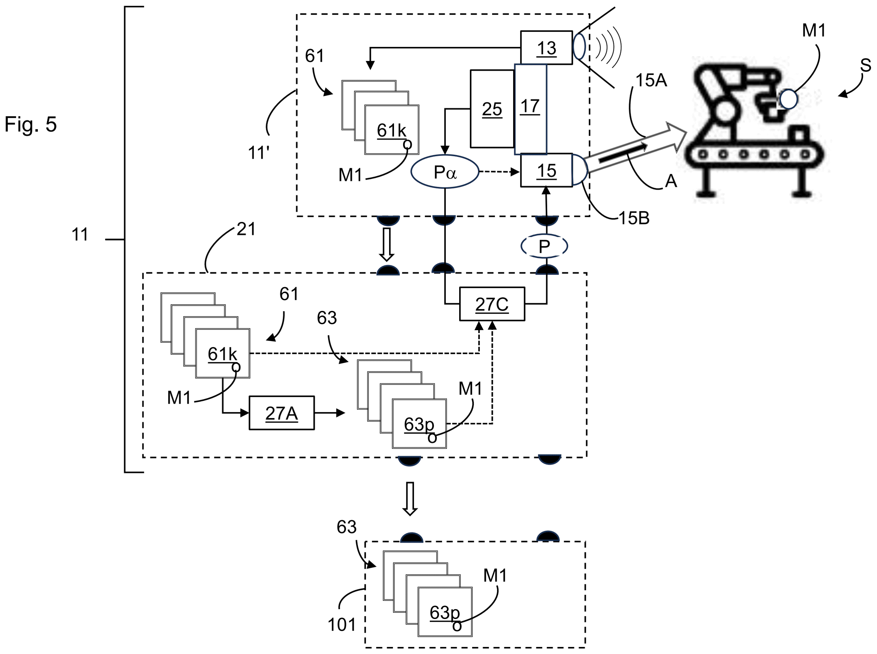

Optional kann die Remote-Assistenz-Einheit 11 ferner ein am Gestell angeordnete Gestell-Batterieeinheit und/oder eine Eye-Tracking-Einheit 25 zur Gewinnung und Ausgabe von Blickrichtungsdaten des Trägers des Brillengestells für eine Ansteuerung des Lichtzeigers 15 (siehe hierzu auch die Beschreibung der Fig. 5) umfassen. Schematisch sind in Fig. 2 für die Eye-Tracking-Einheit 25 Abtastungsbereiche der Pupillenpositionen des linken und des rechten Auges angedeutet.

Die Remote-Assistenz-Einheit 11 kann allgemein als ein Headset mit externem Steuerungsmodul bezeichnet werden und beispielsweise als AR-Brille ausgebildet sein. Ist das Headset als eine Art Schutzbrille ohne optischer Sehstärkenkorrektur ausgebildet, kann es z. B. ergänzend zu einer normalen Brille getragen werden. Optional kann ferner eine Steuerungsfunktionalität vorgesehen werden, beispielsweise handfreie mittels Augensteuerung in bekannten Eye-Tracking-Verfahren oder über Tasten am Steuerungsmodul.

Das Remote-Assistenz-System, insbesondere die Remote-Assistenz-Einheit 11, kann ferner allgemein die folgenden Komponenten und Funktionalitäten umfassen: ein Mikrofon und einen Kopfhörer für die Sprachübertragung; eine LED-Umgebungsbeleuchtung; eine Stereo-Kameraeinheit; ein kompaktes und leichtes Kameraobjektiv, insbesondere zur Fokussierung auf nahgelegene Objekte und/oder zur Vergrößerung entfernter Objekte; Bildstabilisierungsprozesse für das erfasste Videobild; Bildverarbeitungsprozesse zur Übersetzung von Rohsignalen der Videokamera in ein Format eines passenden Datenbusses; ein Lichtzeiger zur Beleuchtung von spezifisch ausgewählten Regionen, beispielsweise in einem dafür festlegbaren Arbeitsfeld; einen Laserpointer als Lichtzeiger; Eye-Tracking-Verfahren zur Steuerung des Lichtzeigers; Sensoren und Funktionalitäten für die Mensch-Maschine-Interaktion; eine Infrarot-Kamera.

Das Remote-Assistenz-System, insbesondere das Steuerungsmodul 21, kann ferner allgemein die folgenden Funktionalitäten umfassen: Funktionalitäten für die Bildverarbeitung; Verfahren für die Bildstabilisierung, insbesondere zur Korrektur von kleineren Kopfbewegungen; Verfahren für die Segmentierung von bestimmten Regionen im Sichtfeld und für eine digitale Zoom-Funktion.

Das Remote-Assistenz-System, insbesondere die Remote-Assistenz-Station 101, kann ferner allgemein die folgenden Komponenten und Funktionalitäten umfassen: Funktionalitäten für die Visualisierung von übertragenen Videodaten am Monitor 105, insbesondere die Visualisierung eines ausgewählten Arbeitsfeldes für z. B. technisches oder medizinisches Personal; eine Benutzeroberfläche für die Steuerung des Remote-Assistenz-Systems und das Auswählen eines Bildbereichs am Monitor 105, wie das Setzen eines Markierpunkts in einem angezeigten Bilddatensatz.

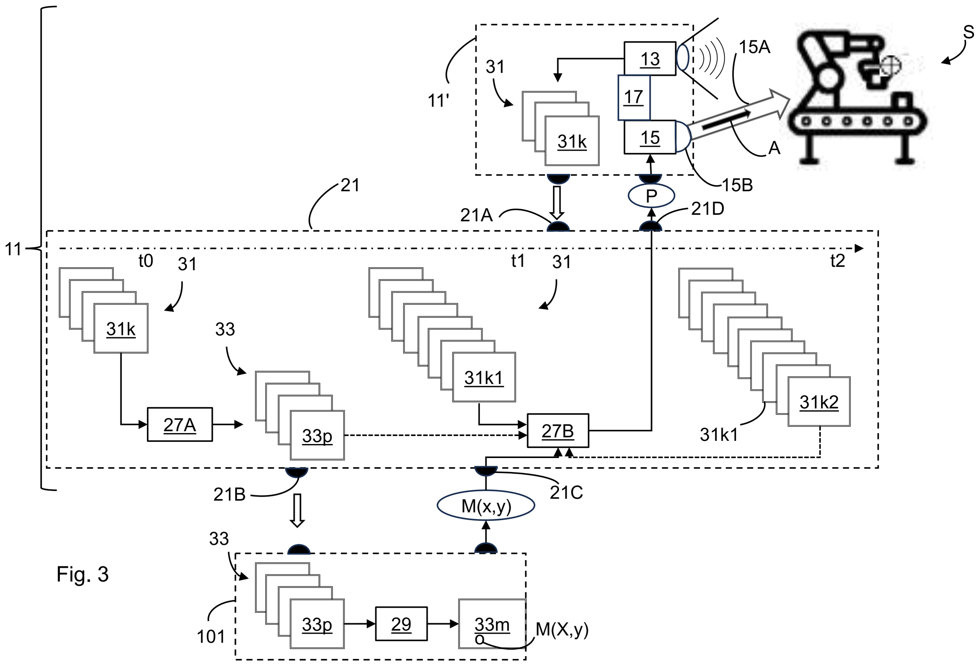

Bezugnehmend auf Fig. 3 wird die Verwendung des Remote-Assistenz-Systems zur visuell unterstützen Kommunikation in einem remote-Betriebsmodus näher erläutert. In einer Art schematischen Flussdiagramm verdeutlicht Fig. 3 allgemein die Funktionalitäten der am Kopf-getragenen Komponenten der Remote-Assistenz-Einheit 11, die in Fig. 3 als Teil eines Headsets 11' zusammengefasst sind, sowie beispielhafte im Steuerungsmodul 21 der Remote-Assistenz-Einheit 11 durchgeführten Prozessschritte. Ferner werden die an der Remote-Assistenz-Station 101 durchgeführten Prozessschritte verdeutlicht.

In Fig. 3 umfasst das Headset 11' die am Gestell 17 vorgesehenen Komponenten. Die Videokamera 13 erfasst kontinuierlich eine Abfolge 31 von (Kamera-)Bilddatensätzen 31k und gibt diese - beispielsweise über das Kabel 21 - an das Steuerungsmodul 21 aus. Beispielsweise schaut der Träger des Headsets in Richtung der Werkzeugmaschine 3, sodass die Bilddatensätzen 31k Bildinformation der Werkzeugmaschine 3 umfassen. Der Lichtzeiger 15 strahlt den Lichtstrahl 15A ab, wobei eine Abstrahlrichtung A mithilfe einer Einstellvorrichtung 15B unter Verwendung eines entsprechenden Einstellparameters P eingestellt werden kann. Beispielsweise ist die Abstrahlrichtung A auf ein spezielles Werkzeug an einem Roboterarm der Werkzeugmaschine 3 gerichtet, sodass der Lichtstrahl 15A auf dieses Werkzeug fällt und es anleuchtet. Der Einstellparameter P kann vom Steuerungsmodul 21 an den Lichtzeiger 15, insbesondere die Einstellvorrichtung 15B, übergeben werden.

Das Steuerungsmodul 21 ist dazu eingerichtet, die Abfolge 31 von Bilddatensätzen 31k der Videokamera 13 an einem Bilddateneingang 21A des Steuerungsmoduls 21 zu empfangen, beispielsweise in einer Bildverarbeitungseinheit 27A (beispielsweise als Software-Modul implementiert) zu verarbeiten und als eine Abfolge 33 von bildverarbeiteten Bilddatensätzen 33p an einem Bilddatenausgang 21B des Steuerungsmoduls 21 bereitzustellen. Die bildverarbeiteten Bilddatensätze 33p werden dann zur Remote-Assistenz-Station 101 übertragen, dort z. B. an einem Eingang des Computers 103 eingelesen und der remote-Person am Monitor 105 angezeigt.

Die Remote-Assistenz-Station 101 ist dazu eingerichtet, basierend auf der dargestellten Abfolge 33 mithilfe einer Markiereinheit 29 (beispielsweise als Software-Modul implementiert) - veranlasst durch die remote-Person - einen Markierdatenpunkt zu setzen. Die remote-Person kennzeichnet dazu - beispielsweise mit der Maus 107A und/oder der Tastatur 107B - einen Punkt oder Bereich eines angezeigten Bilddatensatzes, der von der Markiereinheit 29 als Markierdatenpunkt M(x,y) bezüglich des angezeigten Bilddatensatzes erfasst und festgelegt wird. Beispielsweise ist in Fig. 3 für einen spezifischen Bilddatensatz 33m ein Markierdatenpunkt M(x,y) festgelegt worden und als Kreis im Bilddatensatz 33m angedeutet. In Fig. 3 geht der angezeigte Bilddatensatz 33m auf einen Bilddatensatz 31k zurückgeht, der zum Zeitpunkt t0 aufgenommen wurde.

Der Markierdatenpunkt M(x,y) bestimmt den Pixel im Bilddatensatz 33m und damit die Richtung, in die nach Übertragung des Pixels in das Sichtfeld S der Kamera 13 und damit in das Blickfeld der vor-Ort-Person 1 der Lichtstrahl 15A gerichtet werden soll. Die Markiereinheit 29 übergibt die Markierdaten, z. B. den Markierdatenpunkt M(x,y) sowie Informationen zu dem zugrundeliegenden bildverarbeiteten Bilddatensatz 33m über einen Informationseingang 21C an das Steuerungsmodul 21.

Das Steuerungsmodul 21 ist dazu eingerichtet, die Markierdaten zu empfangen, welche z. B. Pixel-Koordinaten des Markierdatenpunkts M(x,y) oder eine daraus abgeleitete Richtung sowie ergänzende Informationen (z. B. welches Videobild zugrunde liegt) umfassen. In einer Markierrecheneinheit 27B (beispielsweise als Software-Modul implementiert) können die Markierdaten, insbesondere die Pixel-Koordinaten oder eine daraus abgeleitete Richtung, kontinuierlich auf zeitlich später erfasste Bilddatensätze 31k der Videokamera 13 übertragen werden. Fig. 3 verdeutlicht dies für einen zu einem späteren Zeitpunkt t1 erfassten Bilddatensatz 31k1. Alternativ oder ergänzend können bildverarbeitete Bilddatensätze 33p, die auf zu späteren Zeitpunkten erfasste Bilddatensätze zurückgehen, von der Markierrecheneinheit 27B in die Aktualisierung der Markierdaten eingebunden werden.

Die Markierrecheneinheit 27B leitet kontinuierlich aus den Markierdaten für nachfolgende Zeitpunkte t1, t2... Einstellparameter P ab, die an das jeweils aktuelle Sichtfeld S der Kamera 13 und damit das jeweils aktuelle Blickfeld angepasst sind. Dies ist in Fig. 3 für die späteren Zeitpunkte t1 und t2 veranschaulicht, zu denen der Bilddatensatz 31k1 bzw. der Bilddatensatz 31k2 von der Markierrecheneinheit 27B für die Anpassung der Markierdaten und das Bestimmen des Einstellparameters P einbezogen werden.

Insbesondere ist die Markierrecheneinheit 27B dazu eingerichtet, für einen Bilddatensatz 33k1, 33k2, der zeitlich nach dem, dem Markierdatensatz 33m zugeordneten, Bilddatensatz 31k erfasst wurde, den zur dann vorliegenden Kopforientierung passenden Einstellparameter P abzuleiten. Dies basiert beispielsweise auf Markierdaten, die den Markierdatenpunkt M(x,y) und/oder eine daraus abgeleitete Richtung umfassen. Ferner können die Markierdaten Informationen zu dem Bilddatensatz und/oder zu dem bildverarbeiteten Bilddatensatz umfassen, die jeweils dem Markierdatensatz 33m zugeordnet sind. Des Weiteren können die Markierdaten alternativ oder ergänzend Informationen zum Markierdatensatz 33m umfassen.

Ferner kann die Markierrecheneinheit 27B dazu eingerichtet sein, zur Bestimmung des Einstellparameters P den Markierdatenpunkt M(x,y) und/oder eine daraus abgeleitete Richtung auf einen Bilddatensatz 33k1 zu übertragen, der zeitlich nach dem, dem Markierdatensatz 33m zugeordneten Bilddatensatz 31k erfasst wurde. Dies erlaubt es, die Abstrahlrichtung A für den übertragenen Markierdatenpunkt und/oder die daraus abgeleitete übertragene Richtung basierend auf dem jeweils zugrundeliegenden Bilddatensatz 33k1 zu bestimmen.

Beispielsweise kann ein Versatz des Sichtfeldes S erfasst werden, um einen Einstellparameter für einen später erfassten Bilddatensatz 33k1 zu bestimmen. Der Versatz des Sichtfeldes S kann z. B. basierend auf einer Nachverfolgung eines Bildausschnitts im Sichtfeld S oder basierend auf einer Nachverfolgung einer Bildstruktur im Sichtfeld S wie eine Kanten- oder Eckennachverfolgung berechnet werden.

Der Einstellparameter P wird von dem Steuerungsmodul 21 an einem Parameterausgang 21D ausgegeben und über das Kabel 23 von einem Steuerungseingang des Lichtzeigers 15 zur Einstellung der Abstrahlrichtung 15A gemäß dem jeweiligen Einstellparameter P empfangen. Zur Einstellung der Abstrahlrichtung 15A kann der Lichtzeiger 15 eine Einstellvorrichtung 15B umfassen; beispielhaft Ausführungen werden nachfolgend in Zusammenhang mit den Figuren 4A bis 4D beschrieben.

Auf diese Weise kann gewährleistet werden, dass im jeweils aktuellen Blickfeld der vor-Ort-Person 1 der Punkt beleuchtet wird, der dem Markierdatenpunkt M(x,y) im Bilddatensatz 33m entspricht, und dass die korrekte Beleuchtung auch dann erfolgt, wenn sich das Blickfeld (durch eine Bewegung des Kopfes im Raum) und damit das Sichtfeld S der Kamera 13 ändert. Bevorzugt erfolgt die Aktualisierung kontinuierlich und möglichst nah an einer Echtzeitauswertung; gerade bei den möglichen schnellen Bewegungen des Kopfes kann so die remote-Person eine, bezüglich der betrachteten Umgebung stationäre, visuelle Markierung eines Objekts/Bereichs im Blickfeld der vor-Ort-Person 1 erzeugen.

Mit anderen Worten kann die visuelle Markierung 7 im Sichtfeld S, insbesondere in einem im Sichtfeld S festgelegten Arbeitsbereich, räumlich für die vor-Ort-Person 1 stabilisiert werden. Ebenso oder alternativ kann die visuelle Markierung 7 im Sichtfeld S in einer Abfolge von visuell markierten, bildverarbeiteten Bilddatensätzen stabilisiert werden. Nimmt die remote-Person eine Änderung im Markierdatenpunkt M(x,y) vor, wird die visuelle Markierung 7 gemäß der Änderung in den Markierdaten - hier im empfangenen Markierdatenpunkt M(x,y) - im Sichtfeld S verlagert.

Allgemein kann der Lichtzeiger derart ausgeführt oder am Gestell montiert werden, dass die Abstrahlrichtung des Lichtstrahls im Bereich des Kamera-Sichtfelds beispielsweise mittels eines Aktuators variiert werden kann. Der Einstellbereich der Abstrahlrichtung sollte bevorzugt eine Ausleuchtung des gesamten Kamera-Sichtfelds ermöglichen. Wie für die Videokamera ist die Lagerung des Lichtzeigers und auch der Aktuator möglichst klein und leicht auszuführen. Beispielsweise kann ein Aktuator in eine Lagerung des Lichtzeigers integriert werden, um den Lichtzeiger/die Abstrahlrichtung des Lichtstrahls elektrisch einzustellen. Aktuatoren umfassen Spulen, Piezo-Elemente, MEMS-Spiegel etc.

Hinsichtlich der Augensicherheit ist eine maximale Leistung des Lichtzeigers, (z. B. ein Laserpointer) derart gewählt, dass der Lichtzeiger bevorzugt in Laserklasse 1 fällt, aber trotzdem für den Träger vor Ort sowie im Kamerabild gut sichtbar ist. Beispielsweise können gepulste Laserstrahlen zu einem gut sichtbaren Aufblinken auf der Oberfläche eines Objekts im Blickfeld der Person vor Ort führen. Ferner kann die Augensicherheit durch eine automatische Abschaltung des Lichtzeigers gewährleistet werden. Die Abschaltung kann z. B. bei schnellen Änderungen im Kamerabild ausgelöst werden, da diese darauf schließen lassen, dass der Träger seinen Kopf stark bewegt hat. Ergänzend oder alternativ können derartige Kopfbewegungen mit einem am Gestell angebrachten Beschleunigungssensor detektiert werden. Ferner kann in einem ersten Schritt bei der Nutzung des Remote-Assistenz-Systems ein "Arbeitsbereich" im Sichtfeld festgelegt werden, der den Bereich angibt, in den der Lichtstrahl eingestrahlt werden darf und in dem entsprechend der Markierdatenpunkt M(x,y) ausgewählt werden kann.

Die Figuren 4A bis 4D zeigen schematische Skizzen von Lichtzeigern. Die Lichtzeiger umfassen jeweils eine Laserdiode 41 als Lichtquelle und ein der Laserdiode 41 zugeordnetes Objektiv 43 (z. B. ein Projektionsobjektiv), wobei die Laserdiode 41 und/oder das Objektiv 43 in einer Halterung (nicht gezeigt) montiert sind. Das Objektiv 43 kollimiert das von der Laserdiode 41 emittierte Licht zu einem Lichtstrahl 41A, der in einer Abstrahlrichtung abgegeben wird. Die Lichtzeiger der Figuren 4A bis 4D verdeutlichen beispielhafte Einstellvorrichtungen, die dazu eingerichtet sind die Abstrahlrichtung in einem Abstrahlbereich 45 gemäß einem erhaltenen Einstellparameter P einzustellen. Allgemein können zwei oder mehrere Ansätze zur Ausrichtung der Abstrahlrichtung kombiniert werden. Die verschiedenen Komponenten können in einem gemeinsamen Gehäuse gehalten werden, das am Gestell befestigt wird.

Gemäß Fig. 4A umfasst die Einstellvorrichtung mindestens einen Aktuator 47A, der eine Verschiebung der Laserdiode 41 bezüglich des Objektivs 43 in der Ebene bewirken kann.

Die relative Position zwischen Laserdiode 41 und Objektiv 43 bestimmt die Abstrahlrichtung. Beispielsweise können zwei Piezo-Aktuatoren jeweils unabhängig voneinander eine Verschiebung in zwei orthogonale Richtungen (angedeutet durch Pfeile 49A) bewirken. Ähnlich kann eine Verschiebung des Objektivs 43 in der Ebene bewirkt werden, wie in der Ausführungsform gemäß Fig. 4B angedeutet ist (Pfeile 49B; Aktuator(en) nicht gezeigt greifen am Objektiv 43 an). Auch hier ändert sich die relative Position zwischen Laserdiode 41 und Objektiv 43, sodass die Abstrahlrichtung im Abstrahlbereich 45 eingestellt werden kann.

Die Ausführungsformen gemäß den Figuren 4C und 4D verwenden ein bzgl. der Laserdiode 41 feststehendes Objektiv 43, wobei die jeweilige Einstellvorrichtung auf den abgegebenen

Lichtstrahl 41A einwirkt. In Fig. 4C durchleuchtet der Lichtstrahl 41A ein Paar von rotierbaren Prismen-Elementen 53, z. B. Keilprismen, die die Einstellvorrichtung darstellen. Eine Rotierbarkeit der Prismen-Elemente 53 ist in Fig. 4C durch Pfeile 49C angedeutet. Jedes der Prismen-Elemente 53 führt zu einer Winkelablenkung des Lichtstrahls 41A, wobei einander entgegengerichtete Winkelablenkungen die Abstrahlrichtung unverändert lassen. Eine Rotation der Prismen-Elemente 53 in verschiedene Relativpositionen zueinander führt zu einer Einstellbarkeit der Abstrahlrichtung im Abstrahlbereich 45.

Bezugnehmend auf Fig. 6 wird nachfolgend die Umrechnung von zweidimensionalen kartesischen Koordinaten in zweidimensionale Vektorkoordinaten, gegeben durch einen Winkel und den Abstand vom Koordinatenursprung erläutert. Wie bereits erwähnt wird der Koordinatenursprung O(0, 0) durch einander entgegengerichtete Winkelablenkungen in den Prismen-Elementen 53 mit unabhängigen Einstellwinkel (verdeutlicht durch die Winkeln alpha und beta in Fig. 6) beleuchtet. In Fig. 6 verdeutlichen Kreise 71, 73 mit Radius Lmax/2 die möglichen Ablenkungstrajektorien für jedes der beiden Prismen-Elemente 53, wobei hierin beispielhaft angenommen wird, dass die Prismen- Elemente 53 den gleichen Ablenkungswinkel bewirken. Den maximalen Abstand Lmax vom Koordinatenursprung O(0,0) - in Fig. 6 am Ort M(delta, Lmax) - kann man durch gleichgerichtete Winkelablenkungen bewirken. Über derartige gleichgerichtete Winkelablenkungen können alle Punkte entlang eines Kreises (nicht dargestellt) mit Radius Lmax um den Ursprung O(0, 0) durch synchrones Drehen der Prismen-Elemente 53 abgetastet werden. Fig. 6 zeigt den maximalen Abstand Lmax für den Punkt M(delta, Lmax) unter einem Winkel delta.

Unter dem Winkel delta lassen sich alle Punkte in radialer Richtung durch gegengleiches Verdrehen der Prismen-Elemente 53 beleuchten/abtasten. Wie nachfolgend erläutert ist der Drehwinkel alpha des einen doppelt so groß und entgegengesetzt wie der Drehwinkel beta des anderen Prismen-Elements 53 (in die andere Richtung rotiert).

Wie man in Fig. 6 erkennen kann, ist der Abstand L eines Zielpunktes am Ort Z(X, Y) vom Koordinatenursprung (0, 0) gegeben durch L²= X²+Y² und der Winkel delta ist gegeben durch cos(delta)= X/L. Die kombinierte maximale Ablenkung der Prismen-Elemente 53 führt zum Punkt M(delta, Lmax), welcher Ausgangsrotationswinkel der Prismen-Elemente 53 definiert. Um den Strahl entlang der radialen Linie auf die Zielposition Z(X, Y) näher an den Ursprung O(0; 0) heranzuführen, wird ausgehende vom jeweiligen Ausgangsrotationswinkel das erste Prismen-Elemente um den Winkel -alpha gedreht und das zweite Prismen-Element 53 um den Winkel beta in Gegenrichtung.

Das Verhältnis der Winkel ergibt sich unter Betrachtung des eingezeichneten Dreiecks mit den Katheten B (mit der Länge L) und C. Im Dreieck ist die Länge der Kathete B gleich L, so dass gilt cos(alpha)=L/Lmax. Die inneren Dreiecke sind gleichschenklige Dreiecke mit den Längen der beiden Katheten gleich Lmax/2, sodass die den Schenkeln gegenüberliegenden Winkel gleich sind und den Wert alpha bzw. 90°-alpha aufweisen. Daraus ergibt sich der Winkel beta = 180°-2*(90°-alpha)= 2*alpha, wobei die Drehrichtungen entgegengerichtet sind, um den Zielpunkt Z(X, Y) zu beleuchten.

Um den gesamten Zielbereich, d.h. die Kreisfläche um den Ursprung O(0, 0) mit Radius Lmax, ausleuchten zu können, werden bevorzugt Antriebsmotoren verwendet, die für die Prismen-Elemente 53 jeweils eine doppelte Umdrehung (2*360°) bereitstellen.

In Fig. 4D wird eine Einstellvorrichtung verwendet, die einen beispielsweise kippbaren MEMS-Spiegel 55 umfasst. Je nach Orientierung des MEMS-Spiegels 55 (Pfeile 49D), kann die Abstrahlrichtung im Abstrahlbereich 45 eingestellt werden.

Alternative kann ferner eine in der Befestigung des Lichtzeigers vorgesehene (z. B. Piezo-) Kippeinheit das Gehäuse des Lichtzeigers in seiner Lage einstellen und den Lichtstrahl so innerhalb des Abstrahlbereichs 45 einstellen.

In einer erweiterten Ausführungsform kann mithilfe der Eye-Tracking-Einheit 25 (siehe Fig. 2) die Abstrahlrichtung gemäß einer durch das Eye-Tracking bestimmten aktuellen Blickrichtung der vor-Ort-Person 1 eingestellt werden. Auf diese Weise wird im Blickfeld - und damit im Sichtfeld S der Videokamera 13 - eine visuelle Markierung auf dem von der vor-Ort-Person 1 angeschauten Objekt erzeugt, die von der Videokamera 13 erfasst wird. Dies erlaubt es der remote-Person, die die visuelle Markierung im ihr dargestellten Videobild sieht, zu erkennen, auf welches Objekt die vor-Ort-Person 1 gerade schaut und beispielsweise im Gespräch bezugnehmen möchte. Mit anderen Worten kann es dieses Vorgehen bei der Ansteuerung der Markierung der Remote-Person erlauben, am Bildschirm zu sehen, auf welches Objekt der Blick der vor-Ort-Person aktuell gerichtet ist.

Fig. 5 zeigt ein schematisches Flussdiagramm zur Verdeutlichung eines beispielhaften Steuerungskonzepts mithilfe von Eye-Tracking in einem Trägerbetriebsmodus. Der Trägerbetriebsmodus kann auch losgelöst vom remote-Betriebsmodus im Rahmen der hierin offenbarten Konzepte umgesetzt werden.

Ergänzend zur Darstellung in Fig. 3 umfasst das Headset 11' die am Gestell 17 vorgesehene Eye-Tracking-Einheit 25. Die Eye-Tracking-Einheit 25 erfasst Blickrichtungsdaten des Trägers 1 und ist dazu ausgebildet, eine Auswahl von spezifischen Blickrichtungsdaten zu einem Zeitpunkt zu treffen. Beispielsweise über eine Eingabetaste am Steuerungsmodul 21 oder ein von z. B. der Eye-Tracking-Einheit 25 erfasstes Bewegungsmuster (Zwinkern). Die ausgewählten Blickrichtungsdaten werden von der Eye-Tracking-Einheit 25 als Markierrichtungsdaten Pα bereitgestellt.

Wie in Fig. 5 mit einem gestrichelten Pfeil 51 angedeutet, kann der Lichtzeiger 15 mit den Markierrichtungsdaten Pα direkt angesteuert werden, um einen Gegenstand, auf den die vor-ort-Person 1 blickt, mithilfe des Lichtstrahls 15A mit einer visuellen Markierung M1 zu versehen. Die visuelle Markierung M1 wird entsprechend von der Videokamera 13 erfasst; dies ist schematisch in einer Abfolge 61 von Bilddatensätzen 61k, die von der Videokamera 13 an das Steuerungsmodul 21 ausgegeben werden, mit einem Kreis angedeutet. Wie in Zusammenhang mit Fig. 3 erläutert, wird eine Bildverarbeitung der Bilddatensätze 61k in der Bildverarbeitungseinheit 27A durchgeführt, sodass entsprechend eine Abfolge 63 von bildverarbeiteten Bilddatensätzen 63p der Remote-Assistenz-Station 101 zugeführt werden kann. Entsprechend kann die remote-Person die von der vor-Ort-Person 1 durchgeführte Markierung M1 in den dargestellten Bilddatensätzen 63p erkennen und in der Kommunikation mit der vor-Ort-Person 1 berücksichtigen.

Alternativ zur direkten Ansteuerung des Lichtzeigers 15, die meist nur über einen kurzen Zeitraum erfolgt bzw. nur solange, wie die gewünschte Blickrichtung beibehalten werden kann, können die Markierrichtungsdaten Pα ähnlich wie die Markierdaten im remote-Betriebsmodus mithilfe der und an die fortlaufende Bilderfassung angepasst werden. Dies ist in Fig. 5 mit einem durchgezogenen Pfeil 63 von den Markierrichtungsdaten Pα über das Steuerungsmodul 21 (insbesondere über eine Eye-Tracking-Markierrecheneinheit 27C des Steuerungsmoduls 21) zurück zum Headset 11', genauer zum Lichtzeiger 15, angedeutet. Die Eye-Tracking-Markierrecheneinheit 27C ist dazu eingerichtet, einen Versatz des Sichtfeldes S in den Bilddatensätzen 61k und/oder in den bildverarbeiteten Bilddatensätzen 63p zu erfassen und die Markierrichtungsdaten Pα an den Versatz anzupassen und entsprechend als Einstellparameter P für die Einstellvorrichtung 15B auszugeben. Der Versatz des Sichtfeldes S kann beispielsweise basierend auf einer Nachverfolgung eines Bildausschnitts im Sichtfeld S oder basierend auf einer Nachverfolgung einer Bildstruktur im Sichtfeld S, wie eine Kanten- oder Eckennachverfolgung, berechnet werden. Auf diese Weise können einmal festgelegte Blickrichtungsdaten, entsprechend eine einmal festgelegte Position für die visuelle Markierung M1, als eine räumlich stationäre visuelle Markierung M1 im Sichtfeld S über einen längeren Zeitraum beibehalten werden. Dies setzt voraus, dass die Markierung im Sichtfeld S verbleibt und dadurch die Bestimmung des Versatzes möglich ist.

Der in den Figuren 7 und 8 gezeigte Lichtzeiger 15 erlaubt eine Abstrahlung eines (kollimierten) Lichtstrahls 15A in einer einstellbaren Abstrahlrichtung A. Der Lichtzeiger 15 umfasst eine Lichtquelle 41, die z. B. an einem Brillengestell 17A befestigt ist und den Lichtstrahl 15A entlang einer Strahlachse 83 abstrahlt, und eine Einstellvorrichtung 81, die den Lichtstrahl 15A aufnimmt, über einstellbare Spiegel 85 und 87 umlenkt und in der einstellbaren Abstrahlrichtung A abgibt. Die Einstellung der Abstrahlrichtung A ist mit Bezug zu einem Abtastbereich möglich.

Nachfolgend wird die einstellbare optische Strahlführung des Lichtzeigers 15 erläutert, wobei sich die optische Strahlführung durch eine einfache Zuordnung von Zielkoordinaten (gegeben durch einen Winkel und den Abstand von einem Koordinatenursprung O) zu den Spiegeln 85 und 87 zugeordneten Einstellaktuatoren aus. Der Koordinatenursprung O wird in einer Grundstellung des Lichtzeigers 15 durch einen Schnittpunkt der Strahlachse 83 und der Abstrahlrichtung A festgelegt und liegt bevorzugt im Zentrum des Sichtfelds S der Kamera 13 (siehe Fig. 1). Bezugnehmend auf den Lichtzeiger 15 in Fig. 8 verläuft die Abstrahlrichtung A in der in der Fig. 8 gezeigten Grundstellung beispielsweise unter einem Winkel gamma zur Strahlachse 83, wobei der Winkel gamma in einem Winkelbereich von 0,5° bis 5°, z.B. bei 1° oder 1,5°, liegt. In Abhängigkeit vom Strahlversatz zwischen Strahlachse 83 und der Abstrahlrichtung A im Bereich des zweiten Spiegels, z. B. gegeben durch die Entfernung zwischen den Auftreffpunkten 85A und 87A des Lichtstrahls 15A auf den Spiegeln 85 und 87, und dem Winkel gamma ergibt sich der "Arbeitsabstand" des Schnittpunkts vom Lichtzeiger 15. Bevorzugt befindet sich die Arbeitsebene durch den Schnittpunkt in einem für den Träger günstigen Arbeitsabstand. Ein beispielhafter Arbeitsabstand liegt im Bereich von 0,3 m bis 1,5 m, z. B. bei 0,4 m, 0,6 m oder 0,8 m.

Es wird angemerkt, dass in einigen Ausführungsformen eine Spiegelhalterung mindestens eines der beiden Spiegel 85, 87 zur zusätzlichen Einstellung des Winkels gamma und damit des Arbeitsabstands ausgebildet ist. Beispielsweise kann eine Verstellschraube zur Anpassung des Ablenkwinkels eines der Spiegel vorgesehen sein.

Der optische Aufbau des Lichtzeigers 15 umfasst ausgehend von der Lichtquelle 41 den - in Strahlausbreitungsrichtung ersten - Spiegel 85, der den Lichtstrahl um 90° auf den - in Strahlausbreitungsrichtung zweiten - Spiegel 87 ablenkt. Wie erläutert, ist der zweite Spiegel 87 derart ausgerichtet, dass der von ihm umgelenkte Lichtstrahl 15A die Strahlachse 83 in der gewünschten Arbeitsebene schneidet.

Der erste Spiegel 85 ist in einer ersten Halterung 91 (in der Skizze bestehend aus zwei Teilen) montiert, wobei die Lichtquelle 41 einerseits über ein Kugellager 93 an der Halterung 91 und andererseits im Fall der Anwendung im Rahmen der Remote-Assistenz am z. B. Brillengestell angebracht ist. Das Kugellager 93 erlaubt eine Rotation der Halterung und damit des ersten Spiegels 85 um die Strahlachse 83 um bevorzugt 360° (oder eine Endlosrotationsbewegung). Somit können beispielsweise Winkelpositionen der Halterung 91 und damit des ersten Spiegels 85 eingenommen werden, die eine Ablenkung des Lichtstrahls bevorzugt kontinuierlich oder schrittweise in alle azimutalen Richtungen ausgehend von der Strahlachse 83 bewirken.

Die Halterung 91 weist wie in Fig. 8 gezeigt zwei unter einem Winkel von 90° verlaufende Strahlführungskanäle 95A und 95B auf; der eine beginnt an der Lichtquelle 41 und endet am Spiegel 85 und erstreckt sich entlang der Strahlachse 83 und der andere beginnt am Spiegel 85 und erstreckt sich bis zum zweiten Spiegel, d.h. entlang einer im Wesentlichen um 90° zur Strahlachse 83 verlaufenden Achse 89, wodurch die Ausbreitung des Lichtstrahls 115A von der Lichtquelle 41 bis zur Reflektion am zweiten Spiegel 87 ermöglicht wird.

Der Spiegel 87 ist in einer zweiten Halterung 97 montiert, die an der ersten Halterung 91 über ein Kugellager 99 angebracht ist und so um die Achse 89 zumindest in einem Winkelbereich, beispielsweise von plus/minus 30°, rotieren kann. Somit können beispielsweise Winkelpositionen der Halterung 97 und damit des zweiten Spiegels 87 eingenommen werden, die eine Ablenkung des Lichtstrahls bevorzugt kontinuierlich oder schrittweise in Abstrahlrichtungen bewirken, die den gewünschten Abtastbereich aufspannen.

Die ansteuerbaren Antriebe der Rotationsbewegungen können beispielsweise mit Motoren und Zahnradkonfigurationen umgesetzt werden. In der beispielhaften Ausführungsform der Figuren 7 und 8 ist eine Rotierbarkeit des Spiegels 85 mit Hilfe eines (Dreh-)Motors 101 realisiert, der die Halterung 91, den Spiegel 85 mit Hilfe von Zahnrädern 101A, 101B rotiert. Der Motor 101 ist - wie die Lichtquelle 41 - räumlich fest am Brillengestell befestigt. Das Zahnrad 101A ist auf der Achse des Motors 101 angeordnet und greift in das Zahnrad 101B ein. Das Zahnrad 101B ist über das Kugellager 93 um Gehäuse des Lichtzeigers 41 drehbar angebracht und so koaxial zur Strahlachse 83 rotierbar. Aufgrund der festen Verbindung der ersten Halterung 91 mit dem Zahnrad 101B ist die Rotationsstellung des Spiegels 85 über den Motor 101 einstellbar. Wird der Motor 101 angesteuert, dreht sich die abgelenkte Achse 89 sowie auch der zweite Spiegel 87 aus der Zeichenebene heraus.

Eine Rotierbarkeit des Spiegels 87 ist mit Hilfe eines Motors 103 realisiert, der die Halterung 97/den Spiegel 85 mit Hilfe von Zahnrädern 103A, 103B, 103C um die Achse 89 rotiert. Der Motor 103 ist auf der Halterung 91 angeordnet und dreht sich entsprechend mit dieser mit um die Strahlachse 83. Das Zahnrad 103A ist auf der Achse des Motors 103 befestigt. Das doppelte Zahnrad 103B ist ferner auf der Achse des Zahnrads 101B über ein Kugellager 105 befestigt. Das doppelte Zahnrad 103B greift einerseits in das Zahnrad 103A und andererseits - beispielsweise konisch ausgebildet - in das ebenfalls konisch ausgebildete Zahnrad 103C. Das Zahnrad 103C ist mit der zweiten Halterung 97 des Spiegels 87 und über das Kugellager 99 mit der Halterung 91 des ersten Spiegels 85 verbunden. Die Rotationsachse des Kugellagers 99 verläuft senkrecht zur Strahlachse 83 des Lichtzeigers 41 und parallel zur Achse 89. Die Halterung des Spiegels 87 kann z. B. in das Zahnrad 103C integriert sein.

Durch Einstellen der Rotationswinkel der beiden Spiegel 85 und 87 kann die Arbeitsebene zweidimensional mit dem Lichtstrahl abgetastet werden. Ausgehend von der in Fig. 8 gezeigten Grundstellung wird bei einer Rotation des Spiegels 87 der Lichtstrahl 15A entlang einer Linie im Sichtfeld/der Arbeitsebene bewegt, die sich senkrecht aus der Bildebene der Fig. 8 erstreckt. Die maximale Auslenkung des Spiegels 87 in beide Richtungen (maximaler Winkelbereich der Rotation des zweiten Spiegels 87) bestimmt die Breite des Arbeitsbereiches.

Eine Rotation des Spiegels 85 bewirkt eine "Rotation" der mit dem Spiegel 87 beleuchtbaren Linie um die Strahlachse 83. Um eine Soll-Position des Lichtstrahls 15A in der Arbeitsebene einzunehmen, können die X- und Y-Koordinaten in zweidimensionale Vektorkoordinaten umgerechnet werden. Der Vektorwinkel entspricht direkt dem Rotationswinkel des Spiegels 85. Die Vektorlänge, d. h. der radiale Abstand zum Koordinatenursprung O, kann durch den Rotationswinkel des Spiegels 87 unter Einbezug des Arbeitsabstands berechnet werden.

Es wird angemerkt, dass der Antrieb des Zahnrads 103B - in Fig. 8 der Motor 103 - am Zahnrad 101B angeordnet ist. Dadurch beeinflusst eine Rotation des Zahnrads 101B (mittels Motor 101) über die Zahnräder 103A, 103B und 103C - bei starrem Bezug des Motors 103 zu den Zahnrädern 103A, 103B, 103C - eine Änderung des Rotationswinkels des Spiegels 87. Soll dies vermieden werden (beispielsweise ein Kreis um den Koordinatenursprung O herum beleuchtet werden - dies setzt eine unveränderte Ablenkung durch den Spiegel 87 voraus), ist es notwendig, dass das Zahnrad 103B durch synchrones Ansteuern des Motors 103 die Rotation des Motors 101 ausgleicht.

Die hierin offenbarten Konzepte erweitern eine Remote-Assistenz um eine visuelle Markiermöglichkeit, die von einer vor-Ort-Person und/oder einer remote-Person zum gegenseitigen Hervorheben von Objekten im Sichtfeld der vor-Ort-Person genutzt werden kann.

Die Hardware (Recheneinheiten, Computer oder ähnliche geeignete Steuerungshardware) - beispielsweise implementiert in der Remote-Assistenz-Einheit (z. B. die Recheneinheiten 27A, 27B, 27C im Steuerungsmodul 21 oder der Eye-Tracking-Einheit 25) und in der Remote-Assistenz-Station (Markiereinheit 29) - weist beispielsweise digitale Prozessorsysteme mit Dateneingänge und Steuerungsausgänge aufweisenden Mikroprozessorkreisen auf, die gemäß computerlesbaren auf einem computerlesbaren Medium gespeicherten Anweisungen betrieben werden. Üblicherweise weisen die Remote-Assistenz-Einheit und die Remote-Assistenz-Station eine hohe Rechenleistung für eine Echtzeitunterstützung sowie Langzeit- (nicht volatilen) Speicher zum Speichern der Programmanweisungen als auch sehr schnellen Kurzzeit- (volatilen) Speicher zum Speichern von erfassten Daten und Auswertungsergebnissen während (oder sich ergebend aus) der hierin beschriebenen Datenerfassung und Datenverarbeitung von Aufnahmen der Videokamera oder der Eye-Tracking-Einheit auf.

Nachfolgend werden Aspekte eines Lichtzeigers zusammengefasst:
Aspekt 1. Lichtzeiger (15) zur Abstrahlung eines Lichtstrahls (15A) in einer Abstrahlrichtung (A), wobei der Lichtzeiger (15) eine Lichtquelle (41) zur Abgabe des Lichtstrahls (15A) entlang einer Strahlachse (83) und eine Einstellvorrichtung (81), die zur Einstellung der Abstrahlrichtung (A) ausgebildet ist, umfasst wobei die Einstellvorrichtung (81) umfasst:
   einen ersten Spiegel (85) und einen zweiten Spiegel (87), wobei der erste Spiegel (85) entlang der Strahlachse (83) zur Ablenkung des Lichtstrahls (15A) auf den zweiten Spiegel (87) angeordnet ist, und der zweite Spiegel (87) entlang der Achse (89) zur Ablenkung des Lichtstrahls (15A) in eine Arbeitsebene angeordnet ist;
   eine erste Halterung (91), die den ersten Spiegel (85) hält und um die Strahlachse (83) derart rotierbar vorgesehen ist, dass die Achse (89) und der zweite Spiegel um die Strahlachse (83) rotierbar ist, wobei die Ablenkung durch den zweiten Spiegel unverändert bleibt;
   eine zweite Halterung (97), die den zweiten Spiegel (87) hält und um die Achse (89) derart rotierbar vorgesehen ist, dass eine Ablenkung durch den zweiten Spiegel (87) und damit die Abstrahlrichtung (A) einstellbar sind;
   einen ersten Rotationsantrieb zur Ansteuerung der Rotation der ersten Halterung (91) und zur Einstellung einer Winkelposition des ersten Spiegels (85); und
   einen zweiten Rotationsantrieb zur Ansteuerung der Rotation der zweiten Halterung (97) und entsprechend zur Einstellung einer Winkelposition des zweiten Spiegels (87).
Aspekt 2. Lichtzeiger (15) nach Aspekt 1, wobei in einer Grundstellung der Lichtstrahl (15A) sich nach der Ablenkung des Lichtstrahls (15A) durch den zweiten Spiegel (87) unter einem Winkel zur Strahlachse (83) ausbreitet, der im Bereich von 0,5° bis 5°, z.B. bei 1° oder 1,5°, liegt, und die Grundstellung gegeben ist durch die Winkelpositionen der Spiegel (85, 87), bei denen sich ein Schnittpunkt der Abstrahlrichtung (A) mit der Strahlachse (83) ergibt.
Aspekt 3. Lichtzeiger (15) nach Aspekt 2, wobei ein Abstand der Arbeitsebene vom Lichtzeiger (15) durch den in der Grundstellung gegebenen Winkel zwischen Strahlachse (83) und abgegebenen Lichtstrahl (15A) und dem Abstand des zweiten Spiegels von der Strahlachse (83) gegeben ist.
Aspekt 4. Lichtzeiger (15) nach einem der Aspekte 1 bis 13, wobei nach der Ablenkung des Lichtstrahls (15A) durch den ersten Spiegel (85) der Lichtstrahl (15A) sich entlang einer Achse (89) ausbreitet, die im Wesentlichen um 90° zur Strahlachse (83) verläuft.
Aspekt 5. Lichtzeiger (15) nach einem der Aspekte 1 bis 4, wobei die Rotation der ersten Halterung (91) um mindestens 360° einstellbar ist und/oder die Rotation der zweiten Halterung (97) um mindestens 60° einstellbar ist.
Aspekt 6. Lichtzeiger (15) nach einem der Aspekte 1 bis 5, wobei der erste Rotationsantrieb umfasst einen Motor (101), der ortsfest zur Lichtquelle (41) positioniert ist, und Zahnräder (101A, 101B), über die der Motor mit der ersten Halterung (91) verbunden ist, um eine Rotation der ersten Halterung (91) um die Strahlachse (83) zu bewirken.
Aspekt 7. Lichtzeiger (15) nach einem der Aspekte 1 bis 6, wobei der zweite Rotationsantrieb umfasst einen Motor (103), der ortsfest zur ersten Halterung (91) positioniert ist, und Zahnräder (103A, 103B, 103C), über die der Motor mit der zweiten Halterung (97) verbunden ist, um eine Rotation der zweiten Halterung (97) um die Achse (89) zu bewirken.

Es wird explizit betont, dass alle in der Beschreibung und/oder den Ansprüchen offenbarten Merkmale als getrennt und unabhängig voneinander zum Zweck der ursprünglichen Offenbarung ebenso wie zum Zweck des Einschränkens der beanspruchten Erfindung unabhängig von den Merkmalskombinationen in den Ausführungsformen und/oder den Ansprüchen angesehen werden sollen. Es wird explizit festgehalten, dass alle Bereichsangaben oder Angaben von Gruppen von Einheiten jeden möglichen Zwischenwert oder Untergruppe von Einheiten zum Zweck der ursprünglichen Offenbarung ebenso wie zum Zweck des Einschränkens der beanspruchten Erfindung offenbaren, insbesondere auch als Grenze einer Bereichsangabe.

## Patentansprüche

1. Remote-Assistenz-Einheit (11) zum Erzeugen einer visuellen Markierung (7), die für einen Träger (1) der Remote-Assistenz-Einheit (11) sichtbar ist, mit:
einem vom Träger (1) am Kopf tragbaren Gestell (17),
einer am Gestell (17) vorgesehenen Videokamera (13) zum Erfassen einer Abfolge (31) von Bilddatensätzen (31k) eines Sichtfelds (S) der Videokamera (13),
einem am Gestell (17) vorgesehenen Lichtzeiger (15) zur Abstrahlung eines Lichtstrahls (15A) in einer Abstrahlrichtung (A), wobei der Lichtzeiger (15) eine Einstellvorrichtung (15B) umfasst, die zur Einstellung der Abstrahlrichtung (A) in das Sichtfeld (S) gemäß einem Einstellparameter ausgebildet ist, und
einem Steuerungsmodul (21), das dazu eingerichtet ist,
- die Abfolge (31) von Bilddatensätzen (31k) an einem Bilddateneingang (21A) des Steuerungsmoduls (21) zu empfangen und eine Abfolge (33) von bildverarbeiteten Bilddatensätzen (33p) an einem Bilddatenausgang (21B) des Steuerungsmoduls (21) bereitzustellen,
- Markierdaten (M(x,y)), die sich auf einen Markierdatensatz (33m) aus der Abfolge (33) von bildverarbeiteten Bilddatensätzen (33p) beziehen, zu empfangen,
- einen den Markierdaten (M(x,y)) zugeordneten Einstellparameter (P) zu bestimmen, wobei der Einstellparameter (P) die Abstrahlrichtung (A) an einen Bilddatensatz (31k1, 31k2) anpasst, der zeitlich nach einem dem Markierdatensatz (33m) zugeordneten Bilddatensatz (31k) erfasst wurde, und
- den Einstellparameter (P) an die Einstellvorrichtung (15B) auszugeben.

2. Remote-Assistenz-Einheit (11) nach Anspruch 1, wobei
das Steuerungsmodul (21) und die Einstellvorrichtung (15B) dazu eingerichtet sind, den Einstellparameter (P) und die Abstrahlrichtung (A) fortlaufend für die zeitlich nach dem Markierdatensatz (33m) erfassten Bilddatensätze (33k1, 33k2) zu aktualisieren, insbesondere um
- die visuelle Markierung (7) im Sichtfeld (S), insbesondere in einem Arbeitsbereich im Sichtfeld (S), räumlich für den Träger (1) zu stabilisieren, und/oder
- die visuelle Markierung (7) in einer Abfolge von visuell markierten, bildverarbeiteten Bilddatensätzen zu stabilisieren, und/oder
- die visuelle Markierung (7) gemäß einer Änderung im empfangenen Markierdatenpunkt (M(x,y)) im Sichtfeld (S) zu verlagern.

3. Remote-Assistenz-Einheit (11) nach Anspruch 1 oder 2, wobei
das Steuerungsmodul (21) eine Markierrecheneinheit (27B) aufweist, die dazu eingerichtet ist, für einen Bilddatensatz (33k1, 33k2), der zeitlich nach dem, dem Markierdatensatz (33m) zugeordneten Bilddatensatz (33k) erfasst wurde, den Einstellparameter (P) basierend auf Markierdaten, die
- den Markierdatenpunkt (M(x,y)) und/oder eine daraus abgeleitete Richtung, und
- Informationen zu dem Bilddatensatz (33k) und/oder zu dem bildverarbeiteten Bilddatensatz (33p), die jeweils dem Markierdatensatz (33m) zugeordnet sind, und/oder Informationen zum Markierdatensatz (33m)
umfassen,
abzuleiten, sodass insbesondere die Abstrahlrichtung (A) an den Bilddatensatz (33kl, 33k2) angepasst ist.

4. Remote-Assistenz-Einheit (11) nach Anspruch 3, wobei
die Ableitung des Einstellparameters (P), und somit insbesondere die Anpassung der Abstrahlrichtung (A), unter Verwendung eines erfassten Versatzes des Sichtfeldes (S) erfolgt, wobei der Versatz des Sichtfeldes (S) berechnet wird
- basierend auf einer Nachverfolgung eines Bildausschnitts im Sichtfeld (S) oder
- basierend auf einer Nachverfolgung einer Bildstruktur im Sichtfeld (S) wie eine Kanten- oder Eckennachverfolgung.

5. Remote-Assistenz-Einheit (11) nach Anspruch 1 oder 2, wobei
das Steuerungsmodul (21) eine Markierrecheneinheit (27B) aufweist, die dazu eingerichtet ist, zur Bestimmung des Einstellparameters (P) einen Markierdatenpunkt (M(x,y)) und/oder eine daraus abgeleitete Richtung auf einen Bilddatensatz (33k1), der zeitlich nach dem, dem Markierdatensatz (33m) zugeordneten Bilddatensatz (33k) erfasst wurde, zu übertragen und die Abstrahlrichtung (A) für den übertragenen Markierdatenpunkt und/oder die daraus abgeleitete übertragene Richtung basierend auf dem Bilddatensatz (33k1) zu bestimmen.

6. Remote-Assistenz-Einheit (11) nach einem der vorhergehenden Ansprüche, wobei
die Einstellvorrichtung (15B) mindestens einen Aktuator, wie ein Piezo-Element eine Spule, ein Schrittmotor, einen Motor oder ein MEMS-Spiegel, umfasst und der Aktuator dazu eingerichtet ist, eine Auslenkung des Lichtstrahls (15A) zu bewirken, wobei ein, insbesondere zwei, Aktuatoren für eine Auslenkung des Lichtstrahls (15A) in zwei, bevorzugt orthogonale, Richtungen vorgesehen sind, und/oder
wobei die Einstellvorrichtung (15B) eine Halterung einer Lichtquelle des Lichtzeigers (15) oder eines optischen Elements, beispielsweise ein Projektionsobjektiv und/oder ein Umlenkspiegel, umfasst, und mindestens ein Aktuator der Einstellvorrichtung (15B), beispielsweise eine Spule, ein Piezo-Element, ein Motor und/oder ein MEMS-Spiegel, auf die Halterung einwirkt, wobei insbesondere die Aktuatoren für eine Auslenkung des Lichtstrahls (15A) in zwei, vorzugsweise orthogonale, Richtungen vorgesehen sind.

7. Remote-Assistenz-Einheit (11) nach Anspruch 6, wobei der Aktuator dazu eingerichtet ist,
- eine Relativbewegung zwischen optischen Komponenten, wie eine Lichtquelle, z. B. eine Laserdiode, eine Linse oder ein Objektiv, zu bewirken, oder
- als Piezohalterung des Lichtzeigers am Gestell eine bewegliche Befestigung bereitzustellen, oder
wobei die Einstellvorrichtung (15B) ferner zur Ablenkung des Lichtstrahls (15A) eine optische Komponente, wie ein Umlenkspiegel oder ein Prisma-Element, z. B. ein rotierbarer optischer Keile, umfasst und der Aktuator dazu eingerichtet ist,
die optische Komponente zu bewegen, insbesondere zu kippen oder zu rotieren, um eine Ablenkung des Lichtstrahls (15A) zu verändern.

8. Remote-Assistenz-Einheit (11) nach einem der vorhergehenden Ansprüche, wobei
die Remote-Assistenz-Einheit (11) ferner eine Batterieeinheit aufweist, die mit dem Steuerungsmodul (21) eine Prozesseinheit bilden, die kabellos oder kabelgebunden mit der Video-Kamera (13) und dem Lichtzeiger (15) verbunden ist und insbesondere mit einem Tragegurt vom Träger (1) getragen wird, und/oder
wobei die Remote-Assistenz-Einheit (11) eine am Gestell (4) angeordnete Gestell-Batterieeinheit, insbesondere für die Video-Kamera (13) und den Lichtzeiger (15), aufweist.

9. Remote-Assistenz-Einheit (11) nach einem der vorhergehenden Ansprüche, wobei
die Remote-Assistenz-Einheit (11) ferner eine, insbesondere an dem Gestell (4) angeordnete, Eye-Tracking-Einheit (25) zum Erfassen von Blickrichtungsdaten des Trägers (1) umfasst und
die Eye-Tracking-Einheit (25) ferner dazu ausgebildet ist, eine Auswahl von Blickrichtungsdaten zu einem auswählbaren Zeitpunkt zu ermöglichen und diese als Markierrichtungsdaten (Pα) bereitzustellen.

10. Remote-Assistenz-Einheit (11) nach Anspruch 9, wobei der Lichtzeiger (15) dazu eingerichtet ist,
die Markierrichtungsdaten (Pα) von der Eye-Tracking-Einheit (25) zu empfangen und
die Abstrahlrichtung (A) basierend auf den Markierrichtungsdaten (Pα) einzustellen, um eine visuelle Markierung (M1) im Sichtfeld (S) zu erzeugen, die insbesondere in einer Abfolge (61) von Bilddatensätzen (61k) von der Videokamera (13) erfassbar ist.

11. Remote-Assistenz-Einheit (11) nach Anspruch 9 oder 10, wobei
das Steuerungsmodul (21) dazu eingerichtet ist, Markierrichtungsdaten (Pα) von der Eye-Tracking-Einheit (25) zu empfangen, und eine Eye-Tracking-Markierrecheneinheit (27C) aufweist, die dazu eingerichtet ist, einen Versatz des Sichtfeldes (S) zu erfassen und die Markierrichtungsdaten (Pα) an den Versatz anzupassen und als Einstellparameter (P) für die Einstellvorrichtung (15B) auszugeben, um eine räumlich stationäre visuelle Markierung (M1) im Sichtfeld (S) zu erzeugen,
wobei die visuelle Markierung (M1) insbesondere in einer Abfolge (61) von Bilddatensätzen (61k) von der Videokamera (13) erfassbar ist und die Bilddatensätzen (61k) in einer Abfolge (63) von bildverarbeiteten Bilddatensätzen (63p) an einem Bilddatenausgang (21B) des Steuerungsmoduls (21) bereitgestellt werden, und
wobei der Versatz des Sichtfeldes (S) insbesondere berechnet wird
- basierend auf einer Nachverfolgung eines Bildausschnitts im Sichtfeld (S) oder
- basierend auf einer Nachverfolgung einer Bildstruktur im Sichtfeld (S) wie eine Kanten- oder Eckennachverfolgung.

12. Remote-Assistenz-System umfassend:
eine Remote-Assistenz-Einheit (11) nach einem der vorhergehenden Ansprüche und
eine Remote-Assistenz-Station (101) mit einer Recheneinheit (103), einer Anzeige (105) sowie Eingabemitteln (107A, 107B), wobei
die Remote-Assistenz-Station (101) dazu eingerichtet, bildverarbeitete Bilddatensätzen (33p, 63p) von einem Bilddatenausgang (21B) eines Steuerungsmoduls (21) der Remote-Assistenz-Einheit (11) zu empfangen, und wobei
die Remote-Assistenz-Station (101) insbesondere dazu eingerichtet ist,
- mithilfe einer Markiereinheit (29) einen Markierdatenpunkt (M(x,y)) in einem Bilddatensatz (33m) aus der Abfolge (33) von bildverarbeiteten Bilddatensätzen (33p) festzulegen und
- Markierdaten, die den Markierdatenpunkt (M(x,y)) und/oder eine daraus abgeleitete Richtung, sowie Informationen zu dem Bilddatensatz (33k) und/oder zu dem bildverarbeiteten Bilddatensatz (33p), die jeweils dem Markierdatensatz (33m) zugeordnet sind, und/oder Informationen zum Markierdatensatz (33m)
an ein Steuerungsmodul (21) der Remote-Assistenz-Einheit (11) auszugeben.
